# EUROPEAN PATENT SPECIFICATION

(11) **EP 0 456 301 B1**
(45) Date of publication and mention of the grant of the patent: **15.09.1993**
(21) Application number: 91200997.4
(22) Date of filing: 25.04.1991
(51) Int. Cl.: F16D 65/12

(54) **Intrinsically damped brake disc**
Gedämpfte Bremsscheibe
Disque de frein amorti

(30) Priority: 30.04.1990 IT 2016990
(43) Date of publication of application: 13.11.1991
(73) Proprietor: FIAT AUTO S.p.A., 10135 Torino (IT)
(72) Inventor: Poncini, Gianfranco, I-10126 Turin (IT); Dalco', Claudio, I-20010 Cornaredo (Milan) (IT)
(74) Representative: Fusina, Gerolamo

(56) References cited:
- DE-A- 2 006 293
- DE-A- 3 505 516
- DE-B- 1 625 742
- GB-A- 1 166 860
- GB-A- 2 116 651

## Description

This invention relates to an intrinsically damped brake disc, particularly for eliminating braking noise. A brake disc of this kind is known for example from DE-B-16 25 742.

The disc brakes of currently produced automobiles, and in particular the front brakes, have a known tendency to produce monochromatic noise in a frequency range of between 1500 and 12000-13000 Hertz.

These noises known typically as brake whistle are typically produced at low temperature (80-150°C) and low pressure (5-25 bar), ie during light deceleration braking.

This noise has always been a problem in the servicing of a new model, in that even though there are no safety or running comfort implications, the whistle is unpleasant and annoying for the driver and can also lead to false estimation of the state of wear of the brake friction linings.

This noise is generally due to the intrinsic vibration frequencies of one or more parts of the braking system.

In the known brake disc of DE-B-16 25 742 brake noise is damped by means of a stressed damping device acting between the central element and the braking rim of the disc

The object of the present invention is to eliminate braking noise arising from the disc/pad system by damping the intrinsic frequencies of the disc in a more simple and effective way.

This object is attained by an intrinsically damped brake disc essentially comprising a central element provided with a sleeve for fixing said disc and a braking rim rigid with said central element, characterised in that a plurality of weights are fixed circumferentially on the surface of said central element in a position opposing said sleeve, a layer of damping material being interposed between said surface and said weights to form a damped resonator.

According to the invention said plurality of weights consist of ring sectors.

In a further embodiment of this invention said plurality of weights consist of a single ring.

Preferably said plurality of weights and said layer of damping material are fixed by screws.

Again according to the invention said weights are metal weights. In addition, said weights and said layer of damping material can be fixed by gluing.

By way of example said layer of damping material consists of a metal base element and a covering of fibrous material.

Again according to the invention said layer of damping material has the same shape as said weights.

The invention will be more apparent from the following description with reference to the accompanying drawings in which:

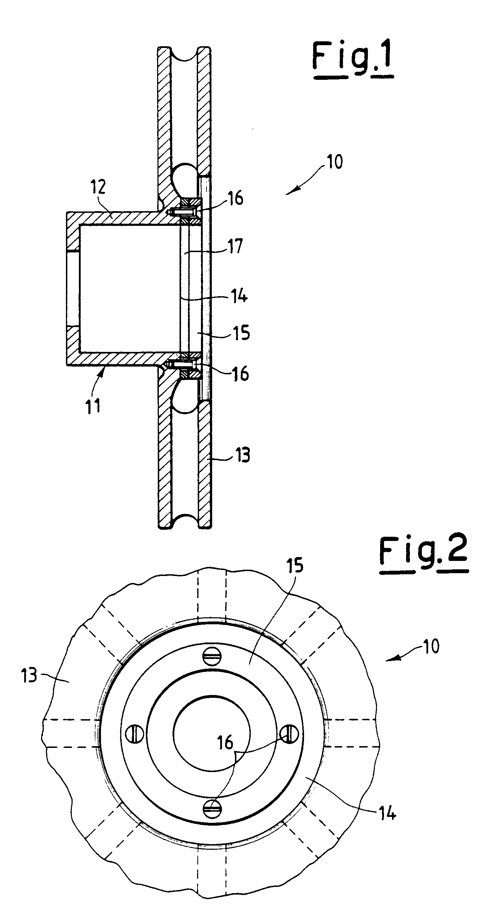

Figure 1 is a sectional side view of a disc according to the invention, and
Figure 2 is a partial front view of the disc of Figure 1.

In the figures the reference numeral 10 indicates overall a disc according to the invention, consisting essentially of a central element 11 comprising a sleeve 12 to which a braking rim 13 is rigidly fixed.

On the surface 14 of the central element 11 there is provided a metal ring 15, which is fixed onto it, with a layer of damping material 17 interposed, by a series of screws 16. As an alternative to the single ring weight 15, a plurality of ring sector weights (not shown) can be provided, in which case the layer of damping material will match the shape of the weights. As an alternative to the fixing screws 16, adhesive materials can be used. The structural simplicity of the present invention means that it can be used for the simple and low-cost construction of a system equivalent to a damped resonator.

## Claims

1. An intrinsically damped brake disc (10) essentially comprising a central element (11) provided with a sleeve (12) for fixing said disc (10) and a braking rim (13) rigid with said central element (11), characterised in that a plurality of weights are fixed circumferentially on the surface (14) of said central element (11) in a position opposing said sleeve (12), a layer of damping material (17) being interposed between said surface (14) and said weights to form a damped resonator.

2. A brake disc as claimed in claim 1, characterised in that said plurality of weights consist of ring sectors.

3. A brake disc as claimed in claim 1, characterised in that said plurality of weights consist of a single ring (15).

4. A brake disc as claimed in claim 1, characterised in that said plurality of weights and said layer of damping material (17) are fixed by screws (16).

5. A brake disc as claimed in claim 1, characterised in that said weights are metal weights.

6. A brake disc as claimed in claim 1, characterised in that said weights and said layer of damping material (17) can be fixed by gluing.

7. A brake disc as claimed in claim 1, characterised in that said layer of damping material (17) consists of a metal base element and a covering of fibrous material.

8. A brake disc as claimed in claim 1, characterised in that said layer of damping material (17) has the same shape as said weights.

## Patentansprüche

1. Eigengedämpfte Bremsscheibe (10), die im wesentlichen ein zentrales Element (11) mit einer Büchse (12) zum Befestigen der Scheibe (10), und einen Bremsrand (13) umfaßt, der starr mit dem zentralen Element (11) verbunden ist,
dadurch **gekennzeichnet,** daß eine Vielzahl von Gewichten in Umfangsrichtung auf der Oberfläche (14) des zentralen Elementes (11) in einer der Büchse (12) gegenüberliegenden Position befestigt sind, wobei eine Schicht aus dämpfendem Material (17) zwischen der Oberfläche (14) und den Gewichten eingefügt ist, um einen gedämpften Resonator zu bilden.

2. Bremsscheibe nach Anspruch 1,
dadurch **gekennzeichnet,** daß die Vielzahl der Gewichte aus Ringsektoren besteht.

3. Bremsscheibe nach Anspruch 1
dadurch **gekennzeichnet,** daß die Vielzahl der Gewichte aus einem Einzelring (15) besteht.

4. Bremsscheibe nach Anspruch 1,
dadurch **gekennzeichnet,** daß die Vielzahl der Gewichte und die Schicht aus dämpfendem Material (17) mit Schrauben (16) befestigt sind.

5. Bremsscheibe nach Anspruch 1,
dadurch **gekennzeichnet,** daß die Gewichte Metallgewichte sind.

6. Bremsscheibe nach Anspruch 1,
dadurch **gekennzeichnet,** daß die Gewichte und die Schicht aus dämpfendem Material (17) durch Kleben befestigt werden können.

7. Bremsscheibe nach Anspruch 1,
dadurch **gekennzeichnet,** daß die Schicht aus dämpfendem Material (17) aus einem metallischen Basiselement und einer Abdeckung aus Fasermaterial besteht.

8. Bremsscheibe nach Anspruch 1,
dadurch **gekennzeichnet,** daß die Schicht aus dämpfendem Material (17) die gleiche Form wie die Gewichte besitzt.

## Revendications

1. Disque de frein amorti de façon intrinsèque (10) comprenant essentiellement un élément central (11) muni d'un manchon (12) pour fixer ledit disque (10) et une jante de freinage (13), solidaire de façon rigide dudit élément central (11), caractérisé en ce qu'une pluralité de masses sont fixées de manière circonférentielle sur la surface (14) dudit élément central (11), dans une position à l'opposé dudit manchon (12), une couche de matière amortissante (17) étant interposée entre ladite surface (14) et lesdites masses pour former un résonateur amorti.

2. Disque de frein tel que revendiqué dans la revendication 1, caractérisé en ce que ladite pluralité de masses est constituée de secteurs annulaires.

3. Disque de frein tel que revendiqué dans la revendication 1, caractérisé en ce que ladite pluralité de masses est constituée d'un anneau unique (15).

4. Disque de frein tel que revendiqué dans la revendication 1, caractérisé en ce que ladite pluralité de masses et ladite couche de matière amortissante (17) sont fixées par des vis (16).

5. Disque de frein tel que revendiqué dans la revendication 1, caractérisé en ce que lesdites masses sont des masses métalliques.

6. Disque de frein tel que revendiqué dans la revendication 1, caractérisé en ce que lesdites masses et ladite couche de matière amortissante (17) peuvent être fixées par collage.

7. Disque de frein tel que revendiqué dans la revendication 1, caractérisé en ce que ladite couche de matière amortissante (17) est constituée d'un élément à base de métal et d'un revêtement de matière fibreuse.

8. Disque de frein tel que revendiqué dans la revendication 1, caractérisé en ce que ladite couche de matière amortissante (17) a la même forme que lesdites masses.
